# EUROPEAN PATENT APPLICATION

(11) **EP 4 674 826 A1**
(43) Date of publication of application: **07.01.2026**
(21) Application number: 24763995.8
(22) Date of filing: 28.02.2024
(51) Int. Cl.: C04B 28/02, B28B 1/30, B33Y 70/00, C04B 14/04, C04B 14/28, C04B 14/40, C04B 16/06, C04B 18/08, C04B 18/14, C04B 22/08, C04B 24/26, C04B 24/38

(54) **POWDER COMPOSITION, MORTAR MATERIAL FOR ADDITIVE MANUFACTURING, MOLDED OBJECT, AND METHOD FOR MANUFACTURING MOLDED OBJECT**

(30) Priority: 02.03.2023 JP 2023031788
(71) Applicant: Polyuse Co., Ltd., Tokyo 105-0013 (JP)
(72) Inventor: KAMADA, Hiroharu, Tokyo 105-0013 (JP)
(74) Representative: Winter, Brandl - Partnerschaft mbB
(86) International application number: PCT/JP2024/007419
(87) International publication number: WO 2024/181518

(57) **Abstract**

Summary

[Problem] To provide a powder composition and the like that are suitable for use in an additive manufacturing process.

[Solution] One embodiment of the present invention provides a powder composition for use in generating a mortar material for additive manufacturing. The powder composition includes a binder (A), a fine aggregate (B), and an admixture (C) that imparts thixotropy.

## Description

The present invention relates to a powder composition, a mortar material for additive manufacturing, a shaped object, and a method for manufacturing a shaped object.

### RELATED ART

In recent years, methods for forming a shape using hydraulic materials, such as cement and plaster, and additive manufacturing apparatuses have been proposed. For example, Patent Document 1 discloses "an additive manufacturing method that can stably produce shaped objects having delicate and diverse designs even when the hydration of a cementitious mixture progresses and the flowability of the mixture decreases". Patent Document 2 discloses "a hydraulic composition for additive manufacturing, the hydraulic composition having excellent extrudability and stackability, and having high interlayer bond strength after curing". Patent Document 3 discloses "a method for selecting a hydraulic composition for an extrusion-based additive manufacturing apparatus that can produce shaped objects having delicate and diverse designs" and the like.

### PRIOR ART DOCUMENTS

### Patent document

[Patent document 1] Japanese Unexamined Patent Application Publication No. 2018-122539
[Patent document 2] Japanese Unexamined Patent Application Publication No. 2020-105023
[Patent document 3] Japanese Unexamined Patent Application Publication No. 2020-90004

### SUMMARY

### Problems to be Solved by Invention

However, there is still room for development of materials that are compatible with additive manufacturing processes.

In view of the above circumstances, the present invention provides a powder composition that can be suitably used in additive manufacturing processes. Means for Solving Problems

According to an aspect of the present invention, there is provided a powder composition for use in producing a mortar material for additive manufacturing. This powder composition contains a binder (A), a fine aggregate (B), and an admixture (C) that imparts thixotropic properties. When a paste-like sample is prepared by adding 15 parts by mass of water to 100 parts by mass of the total of the binder (A) and the fine aggregate (B) and subjected to a slump test at 20°C in accordance with JIS A 1171, T1(5) is 2 cm or less. Here, T1(5) is the slump value obtained from the slump test performed on the sample 5 minutes after preparation. When a paste-like sample is prepared by adding 15 parts by mass of water to 100 parts by mass of the total of the binder (A) and the fine aggregate (B) and a flow table test is performed on the sample at 20°C in accordance with JIS-R5201, T2(5; 15) is 110 mm or more. Here, T2(5; 15) is the flow value at 15 drops in the flow table test performed on the sample 5 minutes after preparation.

According to the above aspect, the powder composition or the like useful for the additive manufacturing process is provided.

### BRIEF DESCRIPTION OF DRAWINGS

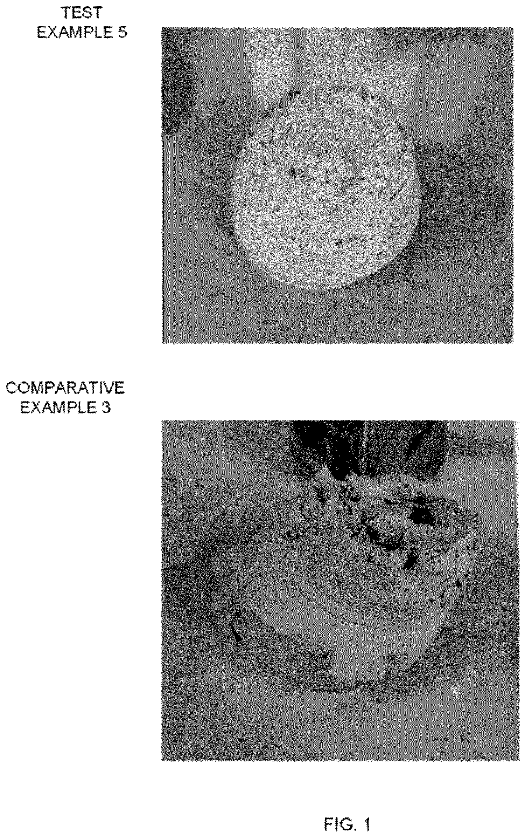

[Fig. 1] Fig. 1 presents photographs illustrating the results of a slump test.

### DETAILED DESCRIPTION

Embodiments of the present invention will be described below, illustrating a first embodiment and a second embodiment. The various features described in the following embodiments can be combined with each other. In the present specification, "XX to YY" indicates XX or more and YY or less, unless otherwise specified.

### <<First Embodiment»

A powder composition according to the first embodiment is described below.

A powder composition for use in producing a mortar material for additive manufacturing including:
a binder (A), a fine aggregate (B), and an admixture (C) that imparts thixotropic properties,
in which when a paste-like sample is prepared by adding 15 parts by mass of water to 100 parts by mass of the total of the binder (A) and the fine aggregate (B) and a slump test is performed on the sample at 20°C in accordance with JIS A 1171, T1(5) is 2 cm or less,
where T1(5) is a slump value obtained from the slump test performed on the sample 5 minutes after preparation, and
in which when a paste-like sample is prepared by adding 15 parts by mass of water to 100 parts by mass of the total of the binder (A) and the fine aggregate (B) and a flow table test is performed on the sample at 20°C in accordance with JIS-R5201, T2(5; 15) is 110 mm or more,
where T2(5; 15) is a flow value at 15 drops in the flow table test performed on the sample 5 minutes after preparation.

The powder composition of the present embodiment is used to produce a mortar material for additive manufacturing.

Here, additive manufacturing is a processing method in which a shape is formed by stacking layers of material. In the present embodiment, a predetermined shaped object can be obtained by stacking layers of the mortar material obtained from the powder composition.

Such shaping can be performed using an additive manufacturing apparatus (3D printer). An additive manufacturing apparatus is a type of industrial robot that produces a three-dimensional object by using 3D data created by a computer as a design blueprint and stacking cross-sectional shapes. Here, the additive manufacturing apparatus may be a commercially available product or a known apparatus. More specifically, the above-described shaping can be performed by filling a tank provided in the additive manufacturing apparatus with a mortar material and extruding the mortar material from a nozzle provided in the additive manufacturing apparatus. The applications of the shaped objects obtained here can be set as appropriate. An example thereof is a construction structure.

The powder composition of the present embodiment is typically a premix for preparing such a mortar material. In other words, the mortar material for additive manufacturing of the present embodiment can be said to be made by adding water to the powder composition. The amount of water added may be appropriately determined in accordance with, for example, the composition of the powder composition and the process conditions to be used, and is preferably 12.0 to 18.0 parts by mass based on 100 parts by mass of the powder composition. The water added here may be appropriately selected in accordance with the application, and may be tap water or ion-exchanged water. The amount of water added is more preferably 13.0 to 16.0 parts by mass, most preferably 14.0 to 15.0 parts by mass, based on 100 parts by mass of the powder composition.

In the present embodiment, the mortar material for additive manufacturing preferably has predetermined properties, which will be explained in detail below.

Various components that may constitute the powder composition of the present embodiment will then be described.

### [Binder (A)]

The powder composition of the present embodiment contains the binder (A). Here, the binder (A) is a general term for inorganic materials that contribute to the development of strength in mortar or concrete.

Here, the binder (A) may contain a cement component (A1). The cement component (A1) may contain a component selected from the group consisting of ordinary Portland cement, moderate-heat Portland cement, low-heat Portland cement, high-early-strength Portland cement, sulfate-resistant Portland cement, blast furnace cement, and fly ash cement.

In addition, the binder (A) may contain an admixture (A2). This admixture (A2) may contain a component selected from the group consisting of fly ash, ground granulated blast-furnace slag, limestone fine powder, stone dust, silica fume, and an expansive material (lime composite-based expansive material). These admixtures (A2) are typically mixed in combination with the above-described cement component (A1).

These binders (A) may be used alone or in combination of two or more. These binders (A) may be used alone or in combination of two or more.

The binder (A) content of the entire powder composition can be set as appropriate. When the mass of the entire powder composition is 100 parts by mass, the binder (A) content is preferably 20 to 80 parts by mass, more preferably 25 to 75 parts by mass, and most preferably 30 to 70 parts by mass. When the content is set within such a range, it is easy to achieve a good balance between the curability of the resulting mortar material and the strength of the resulting cured product.

The powder composition of the present embodiment preferably contains ordinary Portland cement as the binder (A). When the ordinary Portland cement is appropriately incorporated, it is possible to contribute to an improvement in the strength of a shaped object to be obtained while ensuring an appropriate setting rate, and it is possible to improve the balance between the stackability and the pumpability. The amount of the ordinary Portland cement mixed is preferably 40 to 90 parts by mass, more preferably 50 to 85 parts by mass, and most preferably 60 to 75 parts by mass, when the total mass of the binder (A) is 100 parts by mass of the total mass.

The powder composition of the present embodiment preferably contains ground granulated blast-furnace slag as the binder (A). Appropriate incorporation of this ground granulated blast-furnace slag can contribute to the enhancement of the strength of a shaped object to be obtained. The amount of this ground granulated blast-furnace slag is preferably 10 to 70 parts by mass, more preferably 15 to 50 parts by mass, and most preferably 20 to 40 parts by mass, when the total mass of the binder (A) is 100 parts by mass.

The powder composition of the present embodiment preferably contains fly ash as the binder (A). The incorporation of an appropriate amount of fly ash can contribute to improving the strength of a shaped object to be obtained. The amount of the fly ash mixed is preferably 10 to 70 parts by mass, more preferably 15 to 50 parts by mass, and most preferably 20 to 40 parts by mass, when the total mass of the binder (A) is 100 parts by mass.

The powder composition of the present embodiment preferably contains silica fume as the binder (A). Appropriate incorporation of silica fume can improve the balance between the stackability and pumpability of a mortar material to be obtained. The amount of the silica fume mixed is preferably 3 to 30 parts by mass, more preferably 5 to 20 parts by mass, and most preferably 7 to 15 parts by mass, when the total mass of the binder (A) is 100 parts by mass.

### [Fine Aggregate (B)]

The powder composition of the present embodiment contains the fine aggregate (B). In the present embodiment, the fine aggregate (B) refers to an aggregate that completely passes through a sieve with a mesh size of 10 mm and of which 85% or more by mass of the aggregate passes through a sieve with a mesh size of 5 mm (JIS A 0203:2014).

The type of fine aggregate (B) may be appropriately selected in accordance with the application and the like. As an example, the fine aggregate (B) may include one or more components selected from the group consisting of sand, mountain sand, land sand, sea sand, silica sand, crushed sand, and slag fine aggregate. These fine aggregates (B) may be used alone or in combination of two or more. When two or more types are used in combination, fine aggregates having different particle diameters may be mixed.

The fine aggregate (B) content of the entire powder composition can be set as appropriate. When the total mass of the powder composition is 100 parts by mass, the fine aggregate (B) content is preferably 20 to 80 parts by mass, more preferably 25 to 75 parts by mass, and most preferably 30 to 70 parts by mass. When the content is set within such a range, it is easy to achieve both good curability and strength of a cured product to be obtained.

### [Admixture (C) that Imparts Thixotropic Properties]

The powder composition of the present embodiment contains the admixture (C) that imparts thixotropic properties. The powder composition of the present embodiment is used to produce a mortar material for additive manufacturing. The admixture (C) contributes to improving the thixotropic properties of a mortar material to be obtained. That is, as described above, the mortar material is used in additive manufacturing and is typically subjected to an extrusion process in the manufacturing process. Here, when the mortar material has thixotropic properties, the extrudability is improved, and the shape after extrusion is easily stabilized. The admixture (C) used here does not fall under the above-described binder (A) or fine aggregate (B), and refers to any agent that contributes to an improvement in the thixotropic properties of a mortar material to be obtained.

This admixture (C) may be appropriately selected from known materials that can impart the above-described properties. As an example, the admixture (C) that imparts thixotropic properties may contain one or more components selected from the group consisting of cellulose, modified cellulose, minerals, nanofibers, synthetic fibers, urethane, xanthan gum, diutan gum, starch ether, guar gum, polyacrylamide, carrageenan gum, agar, proteins, and latexes.

Examples of modified cellulose that can be used as the admixture (C) of the present embodiment include carboxymethyl cellulose, methylcellulose, hydroxypropyl methylcellulose, hydroxyethyl cellulose, and hydroxypropyl cellulose.

Examples of minerals that can be used as the admixture (C) in the present embodiment include clay minerals, such as attapulgite, bentonite, montmorillonite, kaolin, and sepiolite.

Examples of nanofibers that can be used as the admixture (C) of the present embodiment include carbon nanofibers and cellulose nanofibers.

Examples of synthetic fibers that can be used as the admixture (C) in the present embodiment include polyolefin compounds, such as polypropylene and polyethylene, poly(vinyl alcohol), and poly(vinyl acetate).

Examples of urethane that can be used as the admixture (C) in the present embodiment include various urethane thickeners used as urethane associative thickeners. Examples of urethane associative thickeners include "Thixostar" manufactured by Japan Material Technologies Corporation, "Adeka Nol" series manufactured by Adeka Corporation, and "SN Thickener" series manufactured by San Nopco Limited.

Examples of proteins that can be used as the admixture (C) of the present embodiment include amino acid condensates having a predetermined molecular weight.

Examples of latexes that can be used as the admixture (C) in the present embodiment include chloroprene rubber latex and acrylic latex.

The admixture (C) content of the entire powder composition can be set as appropriate. When the total mass of the binder (A) and the fine aggregate (B) is 100 parts by mass, the admixture (C) content is preferably 0.03 to 0.12 parts by mass, more preferably 0.04 to 0.10 parts by mass, and most preferably 0.05 to 0.08 parts by mass. When the content is set within such a range, the strength of a cured product to be obtained is easily improved while the handleability of a mortar material to be obtained is maintained.

### [Other Components]

In addition, the powder composition of the present embodiment may contain components other than the above-described components (A) to (C) in order to impart desired properties. Other components include rheology modifiers (including, for example, water-reducing agents, dispersants, and fluidizing agents), short fibers, defoamers, setting retarders, gas foaming agents, setting regulators, AE agents, rust inhibitors, water repellents, antibacterial agents, colorants, antifreezing agents, anion exchangers such as hydrotalcite, and water-retaining agents, such as urea. The amounts of these components can be freely selected.

The powder composition of the present embodiment preferably contains a rheology modifier. Appropriate incorporation of this rheology modifier can achieve a good balance between the stackability and the pumpability. In an embodiment, a polycarboxylic acid-based rheology modifier or a melamine-based rheology modifier can be used as the rheology modifier. The amount of the rheology modifier mixed is preferably 0.01 to 3 parts by mass, more preferably 0.03 to 1 part by mass, and most preferably 0.05 to 0.5 parts by mass, when the total mass of the binder (A) and the fine aggregate (B) is 100 parts by mass. The rheology modifier is also referred to as a "water-reducing agent", "dispersant", or "fluidizing agent", in some cases.

The powder composition of the present embodiment preferably contains short fibers. Appropriate incorporation of the short fibers can contribute to improving the strength of a shaped object to be obtained and can also achieve a good balance between the stackability and the pumpability. As the short fibers, fibers made of polyester, such as nylon, can be used. The fiber length (average fiber length) of the short fibers is preferably 1 to 30 mm, more preferably 3 to 25 mm, and most preferably from 5 to 20 mm. The amount of the short fibers mixed is preferably 0.05 to 5 parts by volume, more preferably 0.08 to 3 parts by volume, and most preferably 0.1 to 1.5 parts by volume, when the total volume of the binder (A) and the fine aggregate (B) is 100 parts by volume.

### [Method for Manufacturing Powder Composition]

The powder composition of the present embodiment can be manufactured by mixing the various raw materials described above. The mixing method may be appropriately selected from among known methods, and there are no particular restrictions.

### [Physical Properties of Powder Composition]

The powder composition of the present embodiment preferably satisfies predetermined properties when a sample is prepared by adding water. Specifically, the powder composition of the present embodiment is preferably such that a paste-like sample, prepared by adding 15 parts by mass of water to 100 parts by mass of the total of the binder (A) and the fine aggregate (B), exhibits predetermined measured values when the sample is subjected to the various tests 1 to 3 described below. In the following various tests, the preparation and storage of samples and the execution of tests are performed in an environment of 20°C. In the present specification, a powder that cannot be tested is treated as having no measured values.

The above sample preparation conditions, storage conditions, and testing conditions are specified for the purpose of discussing the physical properties in this section. When the powder composition of the present embodiment is used for an additive manufacturing process, various conditions that are not limited to the above can be used.

### (Test 1: Slump Test)

In the powder composition of the present embodiment, when a paste-like sample is prepared by adding 15 parts by mass of water to 100 parts by mass of the total of the binder (A) and the fine aggregate (B) and a slump test is performed on the sample at 20°C in accordance with JIS A 1171, T1(5) is 2 cm or less. Here, T1(5) is the slump value obtained from the slump test performed on the sample 5 minutes after preparation.

In the case where T1(5) is set to a predetermined value or less as described above, the stackability can be improved when a mortar material obtained from the powder composition is subjected to an additive manufacturing process. T1(5) is more preferably 1.5 cm or less, most preferably 1.0 cm or less. There are no particular restrictions on the lower limit of T1(5), but as an example, it is 0.1 cm or more.

In the powder composition of the present embodiment, the difference between T1(5) and T1(30) is preferably in the range of 0.1 to 1.8 cm. T1(30) is the slump value obtained from the slump test performed on the sample 30 minutes after preparation. T1(5) is usually larger than T1(30); therefore, the difference can be calculated as "T1(5) - T1(30)". In the case where T1(5) - T1(30) is set to a predetermined value or less as described above, the stackability can be improved over a long period of time when a mortar material obtained from the powder composition is subjected to an additive manufacturing process. T1(5) - T1(30) is more preferably 0.3 to 1.5 cm, most preferably 0.5 to 1.2 cm.

### (Test 2: Flow Table Test)

In the powder composition of the present embodiment, when a paste-like sample is prepared by adding 15 parts by mass of water to 100 parts by mass of the total of the binder (A) and the fine aggregate (B) and a flow table test is performed on the sample at 20°C in accordance with JIS-R5201, T2(5; 0) is preferably less than 110 mm. Here, T2(5; 0) is a flow value at 0 drops in the flow table test performed on the sample 5 minutes after preparation.

In the case where T2(5; 0) is set to a predetermined value or less as described above, the stackability can be improved when a mortar material obtained from the powder composition is subjected to an additive manufacturing process. T2(5; 0) is more preferably 108 mm or less, most preferably 105 mm or less. There are no particular restrictions on the lower limit of T2(5; 0), but as an example, it is 100 mm or more.

In the powder composition of the present embodiment, when a paste-like sample is prepared by adding 15 parts by mass of water to 100 parts by mass of the total of the binder (A) and the fine aggregate (B) and the flow table test is performed on the sample at 20°C in accordance with JIS-R5201, T2(5; 15) is 110 mm or more. Here, T2(5; 15) is the flow value at 15 drops in the flow table test performed on the sample 5 minutes after preparation.

In the case where T2(5; 15) is set to a predetermined value or more as described above, the pumpability and the flowability can be improved when a mortar material obtained from the powder composition is subjected to an additive manufacturing process. T2(5; 15) is more preferably 115 mm or more, most preferably 120 mm or more. There are no particular restrictions on the upper limit of T2(5; 15), but as an example, it is 140 mm or less.

In the powder composition of the present embodiment, the difference between T2(5; 15) and T2(5; 0) is preferably in the range of 5 to 40 mm. T2(5; 15) is usually larger than T2(5; 0); therefore, the difference can be calculated as "T2(5; 15) - T2(5; 0)". In the case where T2(5; 15) - T2(5; 0) is set to a predetermined value or less as described above, the balance between the stackability, pumpability, and flowability can be improved when a mortar material obtained from the powder composition is subjected to an additive manufacturing process. T2(5; 15) - T2(5; 0) is more preferably 7 to 30 mm, most preferably 10 to 20 mm.

In the powder composition of the present embodiment, when a paste-like sample is prepared by adding 15 parts by mass of water to 100 parts by mass of the total of the binder (A) and the fine aggregate (B) and the flow table test is performed on the sample at 20°C in accordance with JIS-R5201, T2(30; 0) is preferably less than 108 mm. Here, T2(30; 0) is a flow value at 0 drops in the flow table test performed on the sample 30 minutes after preparation.

In the case where T2(30; 0) is set to a predetermined value or less as described above, the stackability can be improved over a long period of time when a mortar material obtained from the powder composition is subjected to an additive manufacturing process. T2(30; 0) is more preferably 106 mm or less, most preferably 105 mm or less. There are no particular restrictions on the lower limit of T2(30; 0), but as an example, it is 98 mm or more.

In the powder composition of the present embodiment, when a paste-like sample is prepared by adding 15 parts by mass of water to 100 parts by mass of the total of the binder (A) and the fine aggregate (B) and the flow table test is performed on the sample at 20°C in accordance with JIS-R5201, T2(30; 15) is preferably 108 mm or more. Here, T2(30; 15) is the flow value at 15 drops in the flow table test performed on the sample 5 minutes after preparation.

In the case where T2(30; 15) is set to a predetermined value or more as described above, the pumpability and the flowability can be improved over a long period of time when a mortar material obtained from the powder composition is subjected to an additive manufacturing process. T2(30; 15) is more preferably 110 mm or more, most preferably 115 mm or more. There are no particular restrictions on the upper limit of T2(30; 15), but as an example, it is 130 mm or less.

In the powder composition of the present embodiment, the difference between T2(30; 15) and T2(30; 0) is preferably in the range of 5 to 20 mm. T2(30; 15) is usually larger than T2(30; 0); therefore, the difference can be calculated as "T2(30; 15) - T2(30; 0)". In the case where T2(30; 15) - T2(30; 0) is set to a predetermined value or less as described above, the balance between the stackability, pumpability, and flowability can be improved over a long period of time when a mortar material obtained from the powder composition is subjected to an additive manufacturing process. T2(30; 15) - T2(30; 0) is more preferably 7 to 15 mm, most preferably 8 to 12 mm.

### (Test 3: Hand Vane Shear Test)

In the powder composition of the present embodiment, when a paste-like sample is prepared by adding 15 parts by mass of water to 100 parts by mass of the total of the binder (A) and the fine aggregate (B) and a hand vane shear test is performed on the sample at 20°C in accordance with JGS 1411, T3(5) is preferably 1.5 to 5 kPa. Here, T3(5) is a shear yield value obtained from the hand vane shear test performed on the sample 5 minutes after preparation.

In the case where T3(5) is in a predetermined numerical range as described above, the stackability can be improved, and in addition, appropriate processability can be ensured when a mortar material obtained from the powder composition is subjected to an additive manufacturing process. T3(5) is more preferably 1.7 to 4.5 kPa, most preferably 2.0 to 4.0 kPa.

In the powder composition of the present embodiment, when a paste-like sample is prepared by adding 15 parts by mass of water to 100 parts by mass of the total of the binder (A) and the fine aggregate (B) and the hand vane shear test is performed on the sample at 20°C in accordance with JGS 1411, T3(30) is 3.0 to 8.0 kPa. Here, T3(30) is a shear yield value obtained from the hand vane shear test performed on the sample 30 minutes after preparation.

In the case where T3(30) is in a predetermined numerical range as described above, the stackability can be improved over a long period of time, and in addition, appropriate processability can be ensured over a long period of time when a mortar material obtained from the powder composition is subjected to an additive manufacturing process. T3(30) is more preferably 3.5 to 7.5 kPa, most preferably 4.0 to 7.0 kPa.

In the powder composition of the present embodiment, the difference between T3(30) and T3(5) is preferably in the range of 1.5 to 6.5 kPa. T3(30) is usually larger than T3(5); therefore, the difference can be calculated as "T3(30) - T3(5)". In the case where T3(30) - T3(5) is in a predetermined numerical range as described above, the stackability and the processability can be improved over a long period of time when a mortar material obtained from the powder composition is subjected to an additive manufacturing process. T3(30) - T3(5) is more preferably 2.0 to 6.0 kPa, most preferably 2.5 to 5.0 kPa.

The measured values in each of the above-described tests can be obtained by, for example, appropriately selecting the type of the admixture (C), appropriately setting the amount of the admixture (C) mixed, appropriately selecting a combination of types of the binder (A), the fine aggregate (B), and the admixture (C).

### [Mortar Material for Additive Manufacturing]

As described above, the powder composition of the present embodiment is used as a premix for preparing a mortar material for additive manufacturing. That is, the powder composition of the present embodiment is converted into a mortar material for additive manufacturing by adding water. The properties of this mortar material for additive manufacturing may be set appropriately in accordance with the application. For example, the mortar material preferably has the following properties.

That is, when the mortar material for additive manufacturing of the present embodiment is subjected to a slump test at 20°C in accordance with JIS A 1171, the state in which T1(X) is 0 cm or more and 6 cm or less (more preferably, the state in which T1(X) is 1 cm or more and 2 cm or less) is preferably maintained for at least 15 minutes. Here, T1(X) is a slump value obtained from the slump test at a predetermined time.

In other words, when the mortar material for additive manufacturing of the present embodiment is subjected to Test 1 described above, the time required to give a predetermined physical property value is equal to or longer than a predetermined time. This easily contributes to an improvement in the usable time of the mortar material for additive manufacturing. The state where T1(X) is 0 cm or more and 6 cm or less (more preferably, the state in which T1(X) is 1 cm or more and 2 cm or less) is more preferably maintained for at least 20 minutes, most preferably for 30 minutes.

When the mortar material for additive manufacturing of the present embodiment is subjected to a flow table test at 20°C in accordance with JIS-R5201, the state in which T2(X; 0) is 100 mm or more and 120 mm or less (more preferably, the state in which T2(X; 0) is 100 mm or more and 110 mm or less) is preferably maintained for at least 15 minutes. Here, T2(X; 0) is a flow value at 0 drops in the flow table test at a predetermined time.

When the mortar material for additive manufacturing of the present embodiment is subjected to the flow table test at 20°C in accordance with JIS-R5201, the state in which T2(X; 15) is 110 mm or more and 140 mm or less (more preferably, the state in which T2(X; 15) is 105 mm or more and 120 mm or less) is preferably maintained for at least 15 minutes. Here, T2(X; 15) is a flow value at 15 drops in the flow table test at a predetermined time.

When the mortar material for additive manufacturing of the present embodiment is subjected to Test 2 described above, the time required to give a predetermined physical property value is equal to or longer than a predetermined time. This easily contributes to an improvement in the usable time of the mortar material for additive manufacturing. The state in which T2(X; 0) is 100 mm or more and 120 mm or less (more preferably, the state in which T2(X; 0) is 100 mm or more and 110 mm or less) is more preferably maintained for at least 20 minutes, most preferably for 30 minutes. The state in which T2(X; 15) is 110 mm or more and 140 mm or less (more preferably, the state in which T2(X; 15) is 105 mm or more and 120 mm or less) is more preferably maintained for at least 20 minutes, most preferably 30 minutes.

When the mortar material for additive manufacturing of the present embodiment is subjected to a hand vane shear test at 20°C in accordance with JGS 1411, the state in which T3(X) is 1.0 kPa or more and 8.0 kPa or less (more preferably, the state in which T3(X) is 1.5 kPa or more and 5.0 kPa or less) is preferably maintained for at least 15 minutes. Here, T3(X) is a shear yield value obtained from the hand vane shear test at a predetermined time.

When the mortar material for additive manufacturing of the present embodiment is subjected to Test 3 described above, the time required to give a predetermined physical property value is equal to or longer than a predetermined time. This easily contributes to an improvement in the usable time of the mortar material for additive manufacturing. The state in which T3(X) is 1.0 kPa or more and 8.0 kPa or less (more preferably, the state in which T3(X) is 1.5 kPa or more and 5.0 kPa or less) is more preferably maintained for at least 20 minutes, most preferably for 30 minutes.

### [Method for Manufacturing Shaped Object]

A method for manufacturing a shaped object according to the present embodiment will be described below.

That is, the method for manufacturing a shaped object of the present embodiment includes the steps of preparing a mortar material for additive manufacturing, shaping the mortar material for additive manufacturing by an additive manufacturing process, and curing the shaped mortar material for additive manufacturing.

That is, in the present embodiment, the shaped object has a cured product of the mortar material for additive manufacturing. Such a shaped object can be obtained by preparing the above-described mortar material for additive manufacturing, shaping it using an additive manufacturing process, and then curing it.

The additive manufacturing process used in this manufacturing method can be a known process, and the curing conditions can be freely selected. When the curing is performed, temperature conditions, humidity conditions, and the like can be set.

As described above, according to the powder composition of the present embodiment, according to an aspect, the powder composition useful for an additive manufacturing process is provided.

### <<Second Embodiment>>

A mortar material according to the second embodiment is described below.

A mortar material for additive manufacturing including:
cement (A), a fine aggregate (B), an admixture (C) that imparts thixotropic properties, and water.

The mortar material of the second embodiment contains water in addition to the above-described components (A), (B), and (C), but does not necessarily have to be manufactured after obtaining a predetermined powder composition, and the constituent materials may be mixed in any order. In other words, it may be a mortar material obtained by mixing various materials in an additive manufacturing apparatus.

In addition, various raw materials that can be used for the mortar material according to the second embodiment, properties that may be provided as the mortar material for additive manufacturing, applications, and the like may be the same as those described in the first embodiment.

Moreover, the following aspects may also be provided.
(1) A powder composition for use in producing a mortar material for additive manufacturing, comprising: a binder (A), a fine aggregate (B), and an admixture (C) that imparts thixotropic properties.
(2) The powder composition according to (1), wherein the admixture (C) that imparts thixotropic properties contains one or more components selected from the group consisting of cellulose, modified cellulose, minerals, nanofibers, synthetic fibers, urethane, xanthan gum, diutan gum, starch ether, guar gum, polyacrylamide, carrageenan gum, agar, proteins, and latexes.
(3) The powder composition according to (1) or (2), wherein when a paste-like sample is prepared by adding 15 parts by mass of water to 100 parts by mass of the total of the binder (A) and the fine aggregate (B), and a slump test is performed on the sample at 20°C in accordance with JIS A 1171, T1(5) is 2 cm or less, where T1(5) is a slump value obtained from the slump test performed on the sample 5 minutes after preparation.
(4) The powder composition according to any one of (1) to (3), wherein when a paste-like sample is prepared by adding 15 parts by mass of water to 100 parts by mass of the total of the binder (A) and the fine aggregate (B), and a slump test is performed on the sample at 20°C in accordance with JIS A 1171, a difference between T1(5) and T1(30) (T1(5) - T1(30)) is in a range of 0.1 to 1.8 cm, where T1(5) is a slump value obtained from the slump test performed on the sample 5 minutes after preparation, and T1(30) is a slump value obtained from the slump test performed on the sample 30 minutes after preparation.
(5) The powder composition according to any one of (1) to (4), wherein when a paste-like sample is prepared by adding 15 parts by mass of water to 100 parts by mass of the total of the binder (A) and the fine aggregate (B), and a flow table test is performed on the sample at 20°C in accordance with JIS-R5201, T2(5; 0) is less than 110 mm, where T2(5; 0) is a flow value at 0 drops in the flow table test performed on the sample 5 minutes after preparation.
(6) The powder composition according to any one of (1) to (5), wherein when a paste-like sample is prepared by adding 15 parts by mass of water to 100 parts by mass of the total of the binder (A) and the fine aggregate (B), and a flow table test is performed on the sample at 20°C in accordance with JIS-R5201, T2(5; 15) is 110 mm or more, where T2(5; 15) is a flow value at 15 drops in the flow table test performed on the sample 5 minutes after preparation.
(7) The powder composition according to any one of (1) to (6), wherein when a paste-like sample is prepared by adding 15 parts by mass of water to 100 parts by mass of the total of the binder (A) and the fine aggregate (B), and a flow table test is performed on the sample at 20°C in accordance with JIS-R5201, a difference between T2(5; 15) and T2(5; 0) (T2(5; 15) - T2(5; 0)) is in a range of 5 to 40 mm, where T2(5; 15) is a flow value at 15 drops in the flow table test performed on the sample 5 minutes after preparation, and T2(5; 0) is a flow value at 0 drops in the flow table test performed on the sample 5 minutes after preparation.
(8) The powder composition according to any one of (1) to (7), wherein when a paste-like sample is prepared by adding 15 parts by mass of water to 100 parts by mass of the total of the binder (A) and the fine aggregate (B), and a flow table test is performed on the sample at 20°C in accordance with JIS-R5201, T2(30; 0) is less than 108 mm, where T2(30; 0) is a flow value at 0 drops in the flow table test performed on the sample 30 minutes after preparation.
(9) The powder composition according to any one of (1) to (8), wherein when a paste-like sample is prepared by adding 15 parts by mass of water to 100 parts by mass of the total of the binder (A) and the fine aggregate (B), and a flow table test is performed on the sample at 20°C in accordance with JIS-R5201, T2(30; 15) is 108 mm or more, where T2(30; 15) is a flow value at 15 drops in the flow table test performed on the sample 30 minutes after preparation.
(10) The powder composition according to any one of (1) to (9), wherein when a paste-like sample is prepared by adding 15 parts by mass of water to 100 parts by mass of the total of the binder (A) and the fine aggregate (B), and a flow table test is performed on the sample at 20°C in accordance with JIS-R5201, a difference between T2(30; 15) and T2(30; 0) (T2(30; 15) - T2(30; 0)) is in a range of 5 to 20 mm, where T2(30; 15) is a flow value at 15 drops in the flow table test performed on the sample 30 minutes after preparation, and T2(30; 0) is a flow value at 0 drops in the flow table test performed on the sample 30 minutes after preparation.
(11) The powder composition according to any one of (1) to (10), wherein when a paste-like sample is prepared by adding 15 parts by mass of water to 100 parts by mass of the total of the binder (A) and the fine aggregate (B), and a hand vane shear test is performed on the sample at 20°C in accordance with JGS 1411, T3(5) is in a range of 1.5 to 5 kPa, where T3(5) is a shear yield value obtained from the hand vane shear test performed on the sample 5 minutes after preparation.
(12) The powder composition according to any one of (1) to (11), wherein when a paste-like sample is prepared by adding 15 parts by mass of water to 100 parts by mass of the total of the binder (A) and the fine aggregate (B), and a hand vane shear test is performed on the sample at 20°C in accordance with JGS 1411, T3(30) is in a range of 3.0 to 8.0 kPa, where T3(30) is a shear yield value obtained from the hand vane shear test performed on the sample 30 minutes after preparation.
(13) The powder composition according to any one of (1) to (12), wherein when a paste-like sample is prepared by adding 15 parts by mass of water to 100 parts by mass of the total of the binder (A) and the fine aggregate (B), and a hand vane shear test is performed on the sample at 20°C in accordance with JGS 1411, a difference between T3(30) and T3(5) (T3(30) - T3(5)) is in a range of 1.5 to 6.5 kPa, where T3(30) is a shear yield value obtained from the hand vane shear test performed on the sample 30 minutes after preparation, and T3(5) is a shear yield value obtained from the hand vane shear test performed on the sample 5 minutes after preparation.
(14) The powder composition according to any one of (1) to (13), wherein the binder (A) contains a cement component (A1) selected from the group consisting of ordinary Portland cement, moderate-heat Portland cement, low-heat Portland cement, high-early-strength Portland cement, sulfate-resistant Portland cement, blast furnace cement, and fly ash cement.
(15) The powder composition according to (14), wherein the binder (A) further contains an admixture (A2) selected from the group consisting of fly ash, ground granulated blast-furnace slag, limestone fine powder, stone dust, silica fume, and expansive material.
(16) The powder composition according to any one of (1) to (15), wherein the fine aggregate (B) contains one or more components selected from the group consisting of sand, mountain sand, land sand, sea sand, silica sand, crushed sand, and slag fine aggregate.
(17) A mortar material for additive manufacturing, wherein the mortar material is obtained by adding water to the powder composition according to any one of (1) to (16).
(18) The mortar material for additive manufacturing according to (17), wherein the amount of the water is 12.0 to 18.0 parts by mass based on 100 parts by mass of the powder composition.
(19) A mortar material for additive manufacturing, comprising cement (A), a fine aggregate (B), an admixture (C) that imparts thixotropic properties, and water.
(20) The mortar material for additive manufacturing according to any one of (17) to (19), wherein when a slump test is performed on the mortar material at 20°C in accordance with JIS A 1171, a state in which T1(X) is from 0 cm to 6 cm is maintained for at least 15 minutes, where T1(X) is a slump value in the slump test at a given time.
(21) The mortar material for additive manufacturing according to any one of (17) to (20), wherein when a flow table test is performed on the mortar material at 20°C in accordance with JIS-R5201, a state in which T2(X; 0) is from 100 mm to 120 mm is maintained for at least 15 minutes, where T2(X; 0) is a flow value at 0 drops in the flow table test at a given time.
(22) The mortar material for additive manufacturing according to any one of (17) to (21), wherein when a flow table test is performed on the mortar material at 20°C in accordance with JIS-R5201, a state in which T2(X; 15) is from 110 mm to 140 mm is maintained for at least 15 minutes, where T2(X; 15) is a flow value at 15 drops in the flow table test at a given time.
(23) The mortar material for additive manufacturing according to any one of (17) to (22), wherein when a hand vane shear test is performed on the mortar material at 20°C in accordance with JGS 1411, a state in which T3(X) is from 1.0 kPa to 8.0 kPa is maintained for at least 15 minutes, where T3(X) is a shear yield value in the hand vane shear test at a given time.
(24) An article having a hardened body of the mortar material for additive manufacturing according to any one of (17) to (23).
(25) A method for producing an article, comprising a step of preparing the mortar material for additive manufacturing according to any one of (17) to (23), a step of shaping the mortar material by an additive manufacturing method, and a step of curing the shaped mortar material.

Of course, the present invention is not limited to those aspects.

Other aspects may also be provided as described below.
(α1) A powder composition for use in producing a mortar material for additive manufacturing, including:
a binder (A), a fine aggregate (B), and an admixture (C) that imparts thixotropic properties,
in which when a paste-like sample is prepared by adding 15 parts by mass of water to 100 parts by mass of the total of the binder (A) and the fine aggregate (B) and a slump test is performed on the sample at 20°C in accordance with JIS A 1171, T1(5) is 2 cm or less,
where T1(5) is a slump value obtained from the slump test performed on the sample 5 minutes after preparation, and
in which when a paste-like sample is prepared by adding 15 parts by mass of water to 100 parts by mass of the total of the binder (A) and the fine aggregate (B) and a flow table test is performed on the sample at 20°C in accordance with JIS-R5201, T2(5; 0) is 100 mm or more,
where T2(5; 0) is a flow value at 0 drops in the flow table test performed on the sample 5 minutes after preparation.

According to the powder composition (α1) described above, a mortar material having excellent formability and stackability can be easily obtained.
(α2) A powder composition for use in producing a mortar material for additive manufacturing, including:
a binder (A), a fine aggregate (B), and an admixture (C) that imparts thixotropic properties,
wherein the binder (A) contains ground granulated blast-furnace slag,
wherein when a paste-like sample is prepared by adding 15 parts by mass of water to 100 parts by mass of the total of the binder (A) and the fine aggregate (B) and a hand vane shear test is performed on the sample at 20°C in accordance with JGS 1411, T3(5) is 2.0 kPa or more,
where T3(5) is a shear yield value obtained from the hand vane shear test performed on the sample 5 minutes after preparation.

According to the powder composition (α2) described above, a mortar material having excellent formability and strength of the cured product can be easily obtained.
(a3) The powder composition for use in producing a mortar material for additive manufacturing, including:
a binder (A), a fine aggregate (B), and an admixture (C) that imparts thixotropic properties,
in which when a paste-like sample is prepared by adding 15 parts by mass of water to 100 parts by mass of the total of the binder (A) and the fine aggregate (B) and a flow table test is performed on the sample at 20°C in accordance with JIS-R5201, a difference between T2(30; 15) and T2(30; 0) (T2(30; 15) - T2(30; 0)) is in the range of 5 to 20 mm,
where T2(30; 15) is a flow value at 15 drops in the flow table test performed on the sample 30 minutes after preparation, and T2(30; 0) is a flow value at 0 drops in the flow table test performed on the sample 30 minutes after preparation.

According to the powder composition (α3) described above, a mortar material having a long usable time and excellent formability can be easily obtained.

For each of the powder compositions (a1) to (α3) described above, various configurations described above may be used as long as there is no inconsistency.

Although the embodiments of the present invention have been described above, these are merely examples of the present invention, and various configurations other than those described above can be used. The present invention is not limited to the embodiments described above, and variations, improvements, etc. within the scope in which the object of the present invention can be achieved are included in the present invention.

### [EXAMPLES]

The present invention will be described in more detail with reference to the following examples. The present invention is not limited to the following examples (test examples).

### <<Experimental Group A>>

### [Raw Materials Used]

First, the raw materials used in Experimental Group A will be described. The various raw materials used in the "Examples" section are described below. (1) Portland cement: Ordinary Portland cement (blaine specific surface area: 4,440 cm²/g)
(2) Ground granulated blast-furnace slag: Ground granulated blast-furnace slag (density: 2.91 g/cm³, specific surface area: 8,000 cm²/g)
(3) Silica fume: Silica fume (density: 2.25 g/cm³, specific surface area: 2,000,000 cm²/g; "Master Life (registered trademark) SF 610" manufactured by Pozzolith Solutions Ltd.)
(4) Inorganic expansive material: Lime composite-based expansive material ("Denka Power CSA" manufactured by Denka Company Limited)
(5) Fine aggregate: Silica sand No. 4 (water absorption rate: 0.87%)
(6) Thickener: Methylcellulose-based thickener, raw material used was in powder form
(7) Rheology modifier 1: Polycarboxylic acid type, raw material used was in powder form ("Core flow NF-100" manufactured by Taiheiyo Cement Corporation)
(8) Short fiber: Nylon fiber (fiber length: 10 mm)
(9) Water retention agent: Urea

### [Preparation of Powder Composition]

Various raw materials were mixed according to formulations described below, preparing powder compositions for Test Examples 1 to 4. Specifically, the components were mixed for 5 minutes using a Hobart-type mixer, thereby preparing a powdery composition. <Test Examples 1 and 3>
- Portland cement: 70 parts by mass
- Ground granulated blast-furnace slag: 20 parts by mass
- Silica fume: 8.5 parts by mass
- Inorganic-based expansive agent: 1.5 parts by mass
- Fine aggregate: 100% by volume based on total volume of binder
- Rheology modifier 1: 0.160% by mass based on total mass of binder
- Short fiber: 0.2% by volume based on total volume of binder and fine aggregate
- Water retention agent: 1.4% by mass based on total mass of binder

### <Test Examples 2 and 4>

- Portland cement: 70 parts by mass
- Ground granulated blast-furnace slag: 20 parts by mass
- Silica fume: 8.5 parts by mass
- Inorganic-based expansive agent: 1.5 parts by mass
- Fine aggregate: 100% by volume based on total volume of binder
- Thickener: 0.070% by mass based on total mass of binder and fine aggregate
- Rheology modifier 1: 0.160% by mass based on total mass of binder
- Short fiber: 0.2% by volume based on total volume of binder and fine aggregate
- Water retention agent: 1.4% by mass based on total mass of binder

### [Preparation of Mortar Material]

A predetermined amount of tap water was added to 3.0 kg of each of the obtained powder compositions. The mixture was mixed in a Hobart-type mixer at low speed (paddle rotation speed: 140 rpm, paddle revolution speed: 62 rpm) for 1 minute. Mortar adhering to the paddle was scraped off once. The mixture was mixed again at high speed (paddle rotation speed: 285 rpm, paddle revolution speed: 125 rpm) for 2 minutes, thereby obtaining a mortar material. In Test Examples 1 and 2, tap water was added in an amount of 15% by mass based on the total mass of the binder and the fine aggregate. In Test Examples 3 and 4, tap water was added in an amount of 17% by mass based on the total mass of the binder and the fine aggregate. Regarding the mortar materials obtained, evaluations were performed 5 minutes after preparation according to the following test items.

### [Test 1: Slump Test (JIS A 1171)]

The mixed mortar paste was filled into a slump cone in two layers. During filling, the paste was tamped 15 times per layer using a tamping rod to pack the paste in such a manner that there were no voids. After filling, the top surface was scraped flat, and the cone was quickly pulled out. Immediately after the cone was pulled off, the settled portion of the paste was measured with a scale. In Table 1, the evaluation value of the mortar material of each test example is presented as a "mortar slump value". A lower value in this test indicates better stackability when the material is used in an additive manufacturing process.

### [Test 2: Flow Table Test (JIS R 5201)]

The mixed mortar paste was filled into a flow cone in two layers. During filling, the paste was tamped 15 times per layer using a tamping rod to pack the paste in such a manner that there were no voids. After filling, the top surface was scraped flat, and the cone was quickly pulled out. At this time, the diameter of the bottom surface was measured at two locations (perpendicular diameters). The maximum value among these measurements was taken as the flow value at 0 drops. Next, the sample was dropped from a height of 1 cm once per second, for a total of 15 times. Thereafter, the diameter of the bottom surface was measured at two locations (perpendicular diameters). The maximum measured value was taken as the flow value at 15 drops. In Table 1, the evaluation value of the mortar material of each test example is presented as a "mortar flow value". The difference between the mortar flow value at 15 drops and the mortar flow value at 0 drops was taken as the "amount of flow spread". For the mortar flow value at 0 drops, a smaller value indicates better stackability when the material is used in an additive manufacturing process. Regarding the mortar flow value at 15 drops and the amount of flow spread, their larger values indicate better pumpability and flowability when the material is used in an additive manufacturing process.

### [Test 3: Hand Vane Shear Test (JGS 1411)]

The mixed mortar paste was filled into a metal container in two layers. During filling, each layer was tamped ten times with a tamping rod or the outer periphery was hit with a wooden hammer to pack the paste in such a manner that there were no voids. After filling, a metal cross vane attached to a torque wrench was inserted into the paste and rotated at a speed of 6 rpm. The maximum torque value was recorded as it was rotated. The disturbed paste was allowed to reflow and level. This series of operations was repeated twice, and the maximum value was taken as the shear yield value. In Table 1, the evaluation value of the mortar material for each test example is presented as a "shear yield value". A larger value in this test indicates better stackability when the material is used in an additive manufacturing process.

### [Table 1]

**Table 1**

| | | **Test Example** | | | |
|---|---|---|---|---|---|
| | | **1** | **2** | **3** | **4** |
| **Stackability** | **Mortar slump value** | **4.2 cm** | **1.8 cm** | **9.8 cm** | **6.0 cm** |
| | **Shear yield value** | **1.94 kPa** | **2.98 kPa** | **1.20 kPa** | **1.76 kPa** |
| | **Mortar flow value (0 drops)** | **103.4 mm** | **101.3 mm** | **113.2 mm** | **107.6 mm** |
| **Pumpability, flowability** | **Mortar flow value (15 drops)** | **121.5 mm** | **113.2 mm** | **137.5 mm** | **127.2 mm** |
| | **Amount of flow spread** | **18.1 mm** | **11.9 mm** | **24.3 mm** | **19.6 mm** |

As presented in Table 1, the mortar material prepared using the powder composition of Test Example 2 had an excellent balance between stackability, pumpability, and flowability.

### <<Experimental Group B>>

Powder compositions of Examples 1 to 3 and Comparative Examples 1 to 3 having the formulations given in Table 2 were prepared. Example 1 in Table 2 has the same composition as Test Example 2 in Experimental Group A. In Table 2, the amounts of various components are given in parts by mass. Similarly, Comparative Example 1 in Table 2 has the same composition as Test Example 1 in Experimental Group A. Comparative Example 2 simulates the composition disclosed in Patent Document 1, and Comparative Example 3 simulates the composition disclosed in Patent Document 2. In Table 2, the total amount of the binder (A) is set as 100 parts by mass, and the parts by mass of the other components are calculated.

The raw materials not used in Experimental Group A are described below.
(10) High-early-strength Portland cement: High-early-strength Portland cement (Blaine specific surface area: 4,440 cm2/g)
(11) Fly ash
(12) Plaster: "D-101A" manufactured by Noritake Company Limited
(13) Calcium hydroxide: Slaked lime
(14) Alkali metal sulfate: Sodium sulfate
(15) Silica sand No. 5
(16) Silica sand No. 6
(17) Thixotropic agent: "Associative thickener, Thixostar" manufactured by Japan Material Technologies Corporation
(18) Rheology modifier 2: Melamine-based powdered water-reducing agent ("Melment" manufactured by BASF Japan)
(19) Rheology modifier 3: Polycarboxylic acid-based dispersant ("Viscocrete-225P" manufactured by Sika Japan Ltd.)
(20) Defoamer: Polyether-based defoamer ("SN Deformer 14HP" manufactured by San Nopco Limited)

The various raw materials presented in Table 2 were mixed in accordance with the method described in Experimental Group A, thereby preparing powder compositions. Each of the resulting powder compositions was used to prepare a mortar material in the same manner as described in Experimental Group A. In preparing the mortar material, the amount of water given in Table 2 was used (the amount of water in a predetermined proportion based on 100 parts by mass of the total of the binder (A) and the fine aggregate (B)).

For the mortar material obtained in this manner, test values were obtained according to the methods of Tests 1 to 3 described in Experimental Group A. In Experimental Group A, only the data at the time when 5 minutes elapsed from the preparation of the mortar material is presented, whereas in Experimental Group B, the data at the time when 5 minutes elapsed from the preparation of the mortar material is also acquired. The results are presented in Table 2.

### [Table 2]

**Table 2**

| **Material used** | | | | **Example 1** | **Example 2** | **Example 3** | **Comparative Example 1** | **Comparative Example 2** | **Comparative Example 3** |
|---|---|---|---|---|---|---|---|---|---|
| **Composition of powder composition (P)** | **(A) Binder** | **Ordinary Portland cement** | | **70 parts by mass** | **60 parts by mass** | **65 parts by mass** | **70 parts by mass** | **76 parts by mass** | |
| | | **High-early-strength Portland cement** | | | | | | | **88.5 parts by mass** |
| | | **Ground granulated blast-furnace slag** | | **20 parts by mass** | **30 parts by mass** | | **20 parts by mass** | | |
| | | **Fly ash** | | | | **27 parts by mass** | | **14 parts by mass** | |
| | | **Silica fume** | | **8.5 parts by mass** | **8.5 parts by mass** | **8 parts by mass** | **8.5 parts by mass** | | **7.1 parts by mass** |
| | | **Lime composite-based expansive material** | | **1.5 parts by mass** | **1.5 parts by mass** | | **1.5 parts by mass** | | **4.4 parts by mass** |
| | | **Plaster** | | | | | | **7.4 parts by mass** | |
| | | **Calcium hydroxide** | | | | | | **2 parts by mass** | |
| | | **Alkali metal sulfate** | | | | | | **0.6 parts by mass** | |
| | **(B) Fine aggregate** | **Silica sand No. 4** | | **87.8 parts by mass** | | | **87.8 parts by mass** | | |
| | | **Silica sand No. 5** | | | **88.6 parts by mass** | **103.7 parts by mass** | | **100.0 parts by mass** | |
| | | **Silica sand No. 6** | | | | | | | **100.9 parts by mass** |
| | **(C) Admixture** | **Cellulose-based thickener** | | **0.13 parts by mass** | | **0.06 parts by mass** | | **1.49 parts by mass** | **0.53 parts by mass** |
| | | **Thixotropic agent** | | | **0.06 parts by mass** | | | | |
| | **(D) Other components** | **Urea (water retention agent)** | | **1.4 parts by mass** | | | **1.4 parts by mass** | | |
| | | **Rheology modifier 1** | | **0.16 parts by mass** | | | **0.16 parts by mass** | | |
| | | **Rheology modifier 2** | | | | | | **0.42 parts by mass** | |
| | | **Rheology modifier 3** | | | **0.15 parts by mass** | **0.16 parts by mass** | | | **0.04 parts by mass** |
| | | **Defoamer** | | | | | | **0.10 parts by mass** | **0.29 parts by mass** |
| | | **Nylon fiber** | | **0.08 parts by mass** | **0.09 parts by mass** | **0.10 parts by mass** | **0.08 parts by mass** | | |
| **Water W** | | **W/(A + B) [wt%]** | | **15 parts by mass** | **15 parts by mass** | **15 parts by mass** | **15 parts by mass** | **15.2 parts by mass** | **18.6 parts by mass** |
| **Evaluation** | **Test 1** | **5 min (cm)** | | **1.8** | **1.6** | **1.3** | **4.2** | **0.5** | **unmeasurable** |
| | | **30 min (cm)** | | **0.5** | **0.4** | **0.4** | **1.8** | **0** | **unmeasurable** |
| | **Test 2** | **5 min** | **0 drops (mm)** | **101.3** | **107.57** | **105.93** | **103.4** | **99.83** | **99.99** |
| | | | **15 drops (mm)** | **113.2** | **123.89** | **123.65** | **121.5** | **101.95** | **124.18** |
| | | | **Difference (mm)** | **11.9** | **16.32** | **17.72** | **18.1** | **2.12** | **24.19** |
| | | **30 min** | **0 drops (mm)** | **99.8** | **104.29** | **105.04** | **109.78** | **99.88** | **100.74** |
| | | | **15 drops (mm)** | **108.4** | **112.1** | **115.02** | **120.05** | **100.11** | **123.75** |
| | | | **Difference (mm)** | **8.6** | **7.81** | **998** | **10.27** | **0.23** | **23.01** |
| | **Test 3** | **5 min (kPa)** | | **2.98** | **1.57** | **1.64** | **1.94** | **4.26** | **1.3** |
| | | **30 min (kPa)** | | **6.92** | **3.79** | **3.07** | **1.91** | **6.65** | **2.39** |

In Experimental Group B, it was not possible to perform Test 1 for Comparative Example 3. Fig. 1 presents photographs illustrating the results of the slump test. Fig. 1 illustrates the preparation of samples in the slump test of Test Example 5, described below, and Comparative Example 3. The mortar material prepared in Comparative Example 3 was broken when removed from the slump cone, probably because of its excessively high viscosity.

As can be seen from the results of Experimental Group B, the powder composition in each example exhibits good test values when mixed with the predetermined amount of water to prepare the mortar material. Therefore, the powder composition of each example should be useful in additive manufacturing processes. The powder composition described in Comparative Example 2 is considered to be a composition that improves pumpability on the premise that a certain amount of water is added. That is, with the addition of water at the level indicated in Table 2, the T2(5; 15) value is not favorable. Furthermore, if too much water is added, the physical properties of the cured product may deteriorate. Therefore, the powder compositions of the examples are considered to be materials with higher usability. The composition disclosed in Patent Document 3 is considered to exhibit a similar tendency to Comparative Example 2. Comparative Example 3, which simulated the formulation of Patent Document 2, also exhibited poor results in the slump test and was inferior in usability.

### <<Experimental Group C>>

As Test Example 5, a powder composition was prepared by adjusting the composition of Test Example 2 and the amount of water added. Specifically, the powder composition of Test Example 5 was prepared according to the following formulation. The materials used are the same as those described in Experimental Group A.

### <Test Example 5>

- Portland cement: 25 parts by mass
- Ground granulated blast-furnace slag: 75 parts by mass
- Fine aggregate: 100 parts by mass
- Thickener: 0.02 parts by mass
- Short fiber: 0.65 parts by mass

The powder composition obtained in this manner was used to prepare a mortar material according to the method described in [Preparation of Mortar Material]. In Experimental Group C, the amount of water added was 20% by mass based on the total mass of the binder and the fine aggregate.

The resulting mortar material was subjected to various tests in the same manner as in Experimental Group B. The results are presented in Table 3.

### [Table 3]

**Table 3**

| | | | | **Test Example 5** |
|---|---|---|---|---|
| **Evaluation** | **Test 1** | | **5 min (cm)** | **11.6** |
| | | | **30 min (cm)** | **7.7** |
| | **Test 2** | **5 min** | **0 drops (mm)** | **103.63** |
| | | | **15 drops (mm)** | **171.15** |
| | | | **Difference (mm)** | **67.53** |
| | | **30 min** | **0 drops (mm)** | **102.89** |
| | | | **15 drops (mm)** | **153.31** |
| | | | **Difference (mm)** | **50.42** |
| | **Test 3** | | **5 min (kPa)** | **1.23** |
| | | | **30 min (kPa)** | **1.98** |

The mortar material in Test Example 5 exhibited various physical properties that were significantly different from those of Test Example 2 and the like. This suggests that various test values can be varied by adjusting the material formulation of the powder composition, for example.

## Claims

1. A powder composition for use in producing a mortar material for additive manufacturing, comprising:
a binder (A), a fine aggregate (B), and an admixture (C) that imparts thixotropic properties,
wherein when a paste-like sample is prepared by adding 15 parts by mass of water to 100 parts by mass of a total of the binder (A) and the fine aggregate (B) and a slump test is performed on the sample at 20°C in accordance with JIS A 1171, T1(5) is 2 cm or less,
where T1(5) is a slump value obtained from the slump test performed on the sample 5 minutes after preparation, and
wherein when a paste-like sample is prepared by adding 15 parts by mass of water to 100 parts by mass of the total of the binder (A) and the fine aggregate (B) and a flow table test is performed on the sample at 20°C in accordance with JIS-R5201, T2(5; 15) is 110 mm or more,
where T2(5; 15) is a flow value at 15 drops in the flow table test performed on the sample 5 minutes after preparation.

2. The powder composition according to claim 1,
wherein the admixture (C) that imparts thixotropic properties contains one or more components selected from the group consisting of cellulose, modified cellulose, minerals, nanofibers, synthetic fibers, urethane, xanthan gum, diutan gum, starch ether, guar gum, polyacrylamide, carrageenan gum, agar, proteins, and latexes.

3. The powder composition according to claim 1 or 2,
wherein when a paste-like sample is prepared by adding 15 parts by mass of water to 100 parts by mass of the total of the binder (A) and the fine aggregate (B) and a slump test is performed on the sample at 20°C in accordance with JIS A 1171, a difference between T1(5) and T1(30) (T1(5) - T1(30)) is in a range of 0.1 to 1.8 cm,
where T1(5) is a slump value obtained from the slump test performed on the sample 5 minutes after preparation, and T1(30) is a slump value obtained from the slump test performed on the sample 30 minutes after preparation.

4. The powder composition according to any one of claims 1 to 3,
wherein when a paste-like sample is prepared by adding 15 parts by mass of water to 100 parts by mass of the total of the binder (A) and the fine aggregate (B) and a flow table test is performed on the sample at 20°C in accordance with JIS-R5201, T2(5; 0) is less than 110 mm,
where T2(5; 0) is a flow value at 0 drops in the flow table test performed on the sample 5 minutes after preparation.

5. The powder composition according to any one of claims 1 to 4,
wherein when a paste-like sample is prepared by adding 15 parts by mass of water to 100 parts by mass of the total of the binder (A) and the fine aggregate (B) and a flow table test is performed on the sample at 20°C in accordance with JIS-R5201, a difference between T2(5; 15) and T2(5; 0) (T2(5; 15) - T2(5; 0)) is in a range of 5 to 40 mm,
where T2(5; 15) is a flow value at 15 drops in the flow table test performed on the sample 5 minutes after preparation, and T2(5; 0) is a flow value at 0 drops in the flow table test performed on the sample 5 minutes after preparation.

6. The powder composition according to any one of claims 1 to 5,
wherein when a paste-like sample is prepared by adding 15 parts by mass of water to 100 parts by mass of the total of the binder (A) and the fine aggregate (B) and a flow table test is performed on the sample at 20°C in accordance with JIS-R5201, T2(30; 0) is less than 108 mm,
where T2(30; 0) is a flow value at 0 drops in the flow table test performed on the sample 30 minutes after preparation.

7. The powder composition according to any one of claims 1 to 6,
wherein when a paste-like sample is prepared by adding 15 parts by mass of water to 100 parts by mass of the total of the binder (A) and the fine aggregate (B) and a flow table test is performed on the sample at 20°C in accordance with JIS-R5201, T2(30; 15) is 108 mm or more,
where T2(30; 15) is a flow value at 15 drops in the flow table test performed on the sample 30 minutes after preparation.

8. The powder composition according to any one of claims 1 to 7,
wherein when a paste-like sample is prepared by adding 15 parts by mass of water to 100 parts by mass of the total of the binder (A) and the fine aggregate (B) and a flow table test is performed on the sample at 20°C in accordance with JIS-R5201, a difference between T2(30; 15) and T2(30; 0) (T2(30; 15) - T2(30; 0)) is in a range of 5 to 20 mm,
where T2(30; 15) is a flow value at 15 drops in the flow table test performed on the sample 30 minutes after preparation, and T2(30; 0) is a flow value at 0 drops in the flow table test performed on the sample 30 minutes after preparation.

9. The powder composition according to any one of claims 1 to 8,
wherein when a paste-like sample is prepared by adding 15 parts by mass of water to 100 parts by mass of the total of the binder (A) and the fine aggregate (B) and a hand vane shear test is performed on the sample at 20°C in accordance with JGS 1411, T3(5) is 1.5 to 5 kPa,
where T3(5) is a shear yield value obtained from the hand vane shear test performed on the sample 5 minutes after preparation.

10. The powder composition according to any one of claims 1 to 9,
wherein when a paste-like sample is prepared by adding 15 parts by mass of water to 100 parts by mass of the total of the binder (A) and the fine aggregate (B) and a hand vane shear test is performed on the sample at 20°C in accordance with JGS 1411, T3(30) is 3.0 to 8.0 kPa,
where T3(30) is a shear yield value obtained from the hand vane shear test performed on the sample 30 minutes after preparation.

11. The powder composition according to any one of claims 1 to 10,
wherein when a paste-like sample is prepared by adding 15 parts by mass of water to 100 parts by mass of the total of the binder (A) and the fine aggregate (B) and a hand vane shear test is performed on the sample at 20°C in accordance with JGS 1411, a difference between T3(30) and T3(5) (T3(30) - T3(5)) is in a range of 1.5 to 6.5 kPa,
where T3(30) is a shear yield value obtained from the hand vane shear test performed on the sample 30 minutes after preparation, and T3(5) is a shear yield value obtained from the hand vane shear test performed on the sample 5 minutes after preparation.

12. The powder composition according to any one of claims 1 to 11,
wherein the binder (A) contains a cement component (A1) selected from the group consisting of ordinary Portland cement, moderate-heat Portland cement, low-heat Portland cement, high-early-strength Portland cement, sulfate-resistant Portland cement, blast furnace cement, and fly ash cement.

13. The powder composition according to claim 12,
wherein the binder (A) further contains an admixture (A2) selected from the group consisting of fly ash, ground granulated blast-furnace slag, limestone fine powder, stone dust, silica fume, and expansive material.

14. The powder composition according to any one of claims 1 to 13,
wherein the fine aggregate (B) contains one or more components selected from the group consisting of sand, mountain sand, land sand, sea sand, silica sand, crushed sand, and slag fine aggregate.

15. A mortar material for additive manufacturing,
wherein the mortar material is obtained by adding water to the powder composition according to any one of claims 1 to 14.

16. The mortar material for additive manufacturing according to claim 15,
wherein the amount of the water is 12.0 to 18.0 parts by mass based on 100 parts by mass of the powder composition.

17. A shaped object, comprising:
a cured product of the mortar material for additive manufacturing according to claim 15 or 16.

18. A method for manufacturing a shaped object, comprising the steps of:
preparing the mortar material for additive manufacturing according to claim 15 or 16;
shaping the mortar material for additive manufacturing by an additive manufacturing process; and
curing the shaped mortar material for additive manufacturing.
